# EUROPEAN PATENT SPECIFICATION

(11) **EP 2 733 086 B1**
(45) Date of publication and mention of the grant of the patent: **02.09.2015**
(21) Application number: 13003855.7
(22) Date of filing: 02.08.2013
(51) Int. Cl.: B65D 39/00, B27J 5/00, B30B 15/30, B30B 11/02, B29C 43/36, B29C 43/34, B29K 711/02

(54) **Machine for manufacturing bodies of cork agglomerate, in particular stoppers to be used in the oenological field**
Vorrichtung zur Herstellung von Körpern aus Korkagglomerat, insesondere Stopfen für önologische Verwendung
Mahine pour la fabrication de pièces à base de liège aggloméré, particulièrement de bouchons pour utilisation dans le domaine oenologique

(30) Priority: 30.10.2012 IT TO20120956
(43) Date of publication of application: 21.05.2014
(73) Proprietor: G.F.C. Corticas Lda, S. Joao de Ver (PT)
(72) Inventor: Menabreaz, Ernestino, 14053 Canelli (Asti) (IT)
(74) Representative: Cian, Paolo

(56) References cited:
- EP-A1- 0 916 477
- EP-B1- 0 097 783
- WO-A1-00/47390
- DE-A1- 10 319 025
- FR-A1- 2 543 875
- US-A- 1 579 013
- US-A- 1 995 131
- US-B1- 6 210 146

## Description

The present invention relates in general to bodies of a granulated cork based agglomerate, and particularly to manufacturing of such bodies, in particular stoppers to be used in the oenological field.

Stoppers or similar elongated bodies obtained from a mixture consisting essentially of a cork granulate mixed with an adhesive, typically of the elastomeric polyurethane-based type or of natural latex, are known for a long time. These bodies, so-called of cork agglomerate, are manufactured by using machines that comprise a series of plate-shaped molds, each of which has a plurality of cylindrical recesses each intended to form a respective body as a result of feeding a dosed quantity of the said mixture in it. The plates are associated with a handling device, usually of a known type with chain control, that allows them to be moved from a dispensing station in which the mixture is dispensed into the respective recesses, to a baking oven in which, as a result of the heat supplied and of the pressure applied, the adhesive of the mixture undergoes polymerization so that the mixture agglomerates to allow a body to be formed in each recess of the molds, and to an ejecting station in which the agglomerate bodies so formed are ejected from the recesses of the molds.

In the production cycle of the bodies of cork agglomerate performed by the known machines, the mixture necessary to form the bodies is initially prepared according to dosed amounts of the components. This operation is performed within a mixer associated with the machine. Thereafter, for each mold of the machine, the mixture is fed into the various recesses and a compression step is performed, followed by a step in which the recesses of the mold are closed. The closed mold is moved and introduced into the oven in order to cross it over its length, after that the mold is opened and the bodies of agglomerate so obtained are ejected. The mold with the respective clear recesses, undergoes a final moving step in which it is brought to the initial filling station, so as to allow a new production cycle to be started.

US-A-1 579 013 discloses a carousel machine for compacting a composition containing powered cork fed from an upper trough to a number of cylindrical shaped movable molding cavities, by a squeezing progressive action performed by an upper and lower pistons associated with each molding cavity.

FR-A-2 543 875 describes a method and a device for manufacturing cork stoppers at least partially made of cork agglomerate, in which cork particles are mixed with a binder. Doses of the mixture of cork particles and binder are initially subjected to a radial pressure, and then transferred in special cavities of a movable mold in which they are subjected to axial pressures at the opposite axial ends.

WO-A-0 047 390 relates to an apparatus and a method for manufacturing molded synthetic closure members, such as stoppers of expanded thermoplastic material for wine bottles. The apparatus comprises a plurality of molding cavities having a variable capacity as a result of the axial displacement of a sliding piston, which are filled with the synthetic material through an injector, one end of the piston constituting a movable end wall of the respective molding cavity. Each piston also performs the function of an extractor to remove a molded article from the respective molding cavity.

In particular, the invention relates to a machine for manufacturing bodies of cork agglomerate, particularly stoppers to be used in the oenological field, of the type defined in the preamble of appended claim 1.

A machine adapted to manufacture bodies of synthetic material, in the form of plastic stoppers, having the general features mentioned in the preamble of appended claim 1 is known from US-A-1 579 013. The bodies manufactured by such a machine are formed by using a thermoplastic resin to which a dosed amount of a natural colorant, such as caramel, is added. The machine comprises stationary upper portion and a pair of movable portions. One of the latter is a movable plate in which at least one cylindrical molding recess, preferably a series of parallel molding recesses, is formed, the shape of which corresponds to that of a body to be molded. The movable portions of the machine can be opened as a result of the movement of a movable platform at the end of a molding step, to allow the resin bodies to be ejected from the molding recesses as a result of the sliding of stationary piston with respect to the recesses of the movable plate. In the upper portion of the machine, runners are provided for supplying the resin from an injection nozzle arranged above the machine to the molding recesses, which runners are heated in order to keep a desired temperature of the resin when it is fed to the molding recesses.

The known machines of the type defined above, however, have a number of drawbacks. Firstly, the shape of the bodies of granulate, in particular their axial length, cannot be adjusted unless changing substantially the respective machine and, more specifically, by replacing the various molds. Moreover, these known machines require ovens with a very extended length, taking into account that the time required for each mold to cross the oven corresponds to the time needed for polymerization of the adhesive of the bodies of granulate. Furthermore, the need to handle the molds between the various stations involves limits for the weight, and therefore for the size, of the various molds, so that each mold usually cannot include a number of recesses greater than a limit value of few tens. All thing considered, the known machines reveals to be not so flexible in use, and they require relatively long times for manufacturing a large number of bodies of granulated cork, with the result that the cost of the individual bodies is relatively high.

In order to solve the drawbacks of the known machines reported above, the subject of the invention is a machine having the features mentioned in the appended claims.

In particular, by virtue of the fact that in the machine of the invention the mold is mounted stationarily, and that the heating means are associated with the mold, the size of the machine can be made very small compared to that of the known machines, which allows to cover a machining area very small compared to that required for the machines known before, by virtue of the fact that there is no need to use an oven considerably extended in length. Also, the machine of the invention does not require handling means for moving the molds, which are usually complex, to full advantage of the simplicity of the machine, and its operation is considerably more noiseless than the known machines. The machine of the invention also allows an hourly production of bodies of cork agglomerate to be obtained, on the same dimensions, that is at least double than that obtainable with the currently known machines. By virtue of the simple structure of the machine, it can be made with considerably reduced cost with respect to those required by the machines known before, and its operation requires a relatively very limited power.

According to a preferred feature of the invention, the compression means for compressing the mixture in the mold recesses comprise a piston for each recess of the mold, which is axially slidably mounted in the corresponding recess.

By virtue of this feature, the machine of the invention allows the dimensional parameters of the bodies of agglomerate, such as their length, their density and the baking time or the kind of mixture, to be easily changed between a production step and the subsequent one, in a very short time.

Further characteristics and advantages of the invention will become more clear from the following detailed description, given as non-limitative example and referred to the accompanying drawings, in which:
- Figure 1 is a schematic perspective view of a machine according to the invention,
- Figure 2 is an exploded and enlarged perspective view of a detail indicated by arrow II in Figure 1,
- Figure 3 to 6 are side elevational schematic views showing a first series of operational steps of the machine according to the invention, during a processing cycle,
- Figure 7 is an exploded and enlarged perspective view of a detail indicated by arrow VII in Figure 6,
- Figures 8 to 10 are views similar to Figures 3 to 6, showing another series of operational steps of the machine according to the invention.

With reference to the drawings, a machine for manufacturing bodies of a granulated cork based agglomerate, particularly stoppers to be used in the oenological field, is indicated 10 as a whole.

The machine 10 comprises a fixed basement (not visible in the figures) that carries a stationary mold 12 defining a plurality of parallel cylindrical through recesses, indicated 14, typically in the number of several thousands. The recesses 14 can be made by a series of metal tubes 16 arranged side by side and fixed to each other, for example by welding, so as to make a tube bundle, as shown in the exemplificative embodiment represented in the figures, or by means of a metal panel, for example of steel, in which a series of parallel through holes are formed to constitute the recesses 14.

The machine 10 also includes a distribution device for dispensing into the recesses 14 of the mold 12 a mixture M obtained by mixing essentially dosed amounts of a granulated cork and an adhesive, typically of the elastomeric type such as polyurethane-based or of natural latex. The components of the mixture M are fed to a mixing unit, preferably of the screw feeder type (not shown in the figures being of a type known per se), according to predetermined batches. As a result of mixing performed in the mixer, the mixture M is made homogeneous and it is delivered by gravity drop to a tank 18 of the sliding drawer type, generally defined by a series of side walls delimiting an area equal to that of the surface of the mold 12, lacking a bottom wall.

The tank 18 is slidably mounted between a resting position in which it is arranged on a standing plate 22, adjacent to the mold 12, and an active position above the mold 12 in which the mixture M can be gravity-fed to the various recesses 14. Sliding of the tank along the direction transverse to the recesses 14 is controlled by actuators 20, for example of the hydraulic cylinder type, that allow such a tank to be selectively moved between the aforesaid resting and active positions, according to a to-and-fro reciprocating motion.

A base plate 24, the extension of which is substantially the same of the mold 12, is mounted below the mold 12, and a plurality of pistons 26 are connected thereto. Each piston 26 includes a respective rod 28 connected perpendicularly to the plate 24, for example through a screw/nut-thread coupling or by a forced coupling, and an enlarged head 30, on the side opposite to the plate 24, which slidably and sealingly engages a respective recess 14 of the mold 12.

The base plate 24 is in turn slidably mounted with respect to the mold 12 along the axial direction of the recesses 14, by actuators 32, in order that the simultaneous movement of all the pistons 26 with respect to the respective recesses 14 is accomplished.

A movable cover plate 34 adapted to close the recesses 14 is arranged above the mold 12, the extension of which is also substantially the same of the mold 12. Such a plate can be brought into contact, as a result of the operation of actuators 36, with the upper surface of the mold 12, to close the upper end of all the recesses 14 after they have been filled by the mixture M.

The pistons 26 perform a number of functions, during the operation of the machine 10. Firstly, the pistons 26 constitute compression means for the mixture M received within the recesses 14, so as to keep the mixture M in a desired condition of compression during the baking and polymerization step of the adhesive, as well as to close the bottom of the recesses 14, on the side opposite to the cover plate 34. Secondly, since the axial position of the pistons 26 within the recesses 14 can be adjusted by controlling the movement of the actuators 32, they allow a desired length and density of the bodies of cork agglomerate to be obtained during the various manufacturing cycles carried out by the machine 10. Moreover, as it will be described in more detail below, the pistons 26 act as ejecting means in order to remove the bodies of cork agglomerate produced by the machine 10, from the recesses 14 of the mold 12.

An auxiliary metal plate 38, having a size similar to the plate 24, is connected to the base plate 24 at the side opposite to the pistons 26, heating means (not shown in detail in the figures) of the mold 12 being associated with such an auxiliary plate. These heating means are usually of the resistor type and/or of the diathermic oil circulation type, and perform the function to heat the mold 12 by conduction, convection and radiation, to a temperature such as to allow polymerization of the adhesive of the mixture M contained in the recesses 14 to be obtained, in order that the mixture M in each recess 14 is transformed in a body of cork agglomerate. Of course, the heating means are controlled thermostatically so as to maintain the temperature of the mold 12 at a predetermined level corresponding to that required for obtaining polymerization of the adhesive of the mixture M.

The machine 10 also comprises ejection means for ejecting the bodies of cork agglomerate from the mold 12, to be operated at the end of each manufacturing cycle, which consist of the same pistons 26 that, at the end of a manufacturing cycle, are brought into a position in which the top of their heads 30 is arranged at the upper surface of the recesses 14.

In order to complete ejection of the agglomerate bodies so manufactured by the machine 10, the lower edge 19a of the front wall 18a of the tank 18, that is the edge of this tank adjacent to the upper surface of the mold 12, acts as a scraper for removing the agglomerate bodies ejected from the recesses 14. Also the upper edge 19b of the same front wall 18a, in the open condition of the cover plate 34, that is in its position spaced from the mold 12, performs the function of a scraper for scraping the surface of the plate 34 facing the mold 12, in order to remove possible agglomerate bodies that may remain stuck to it at the end of their manufacture.

Since the edges 19a and 19b are integral with the tank 18, they are also operated according to the same reciprocating sliding motion, along the direction transverse to the axial extension of the recesses 14.

Of course, the operation of the various components of the machine, in particular the driving control of the actuators 20, 32 and 36, as well as the control of the time and intensity of the heating means, are conveniently fully automatically operated by an electronic control unit that allows also the operational parameters of the machine 10 to be changed in a simple and fast manner.

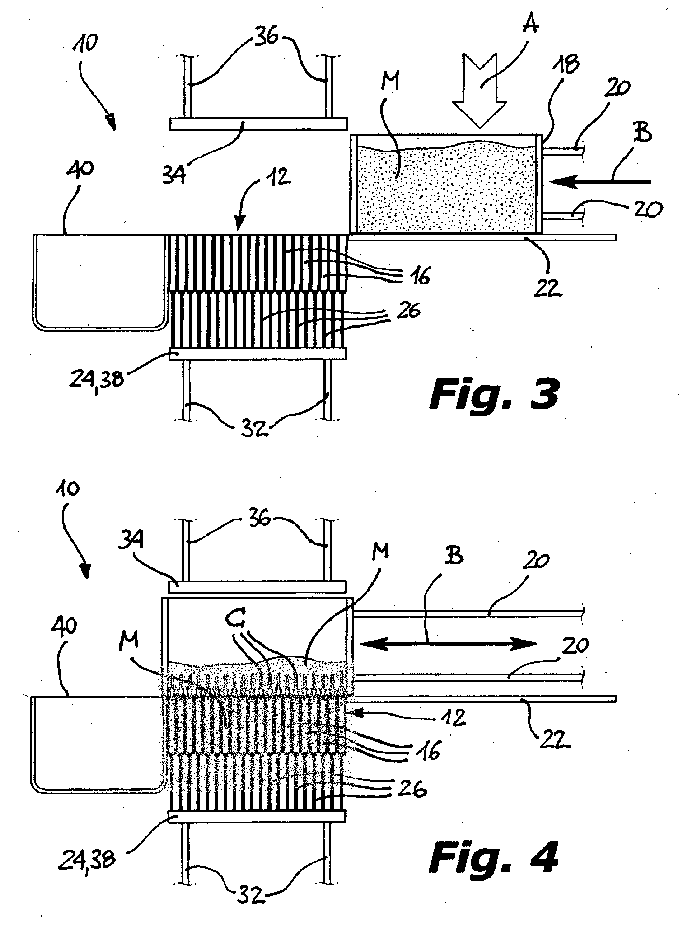

In operation of the machine 10, the tank 18 is initially filled by gravity drop with a dosed and homogeneous amount of the mixture M (arrow A of Figure 3), which is fed from the screw feeder mixing unit superimposed to it, while the tank 18 is in its resting position above the standing plate 22.

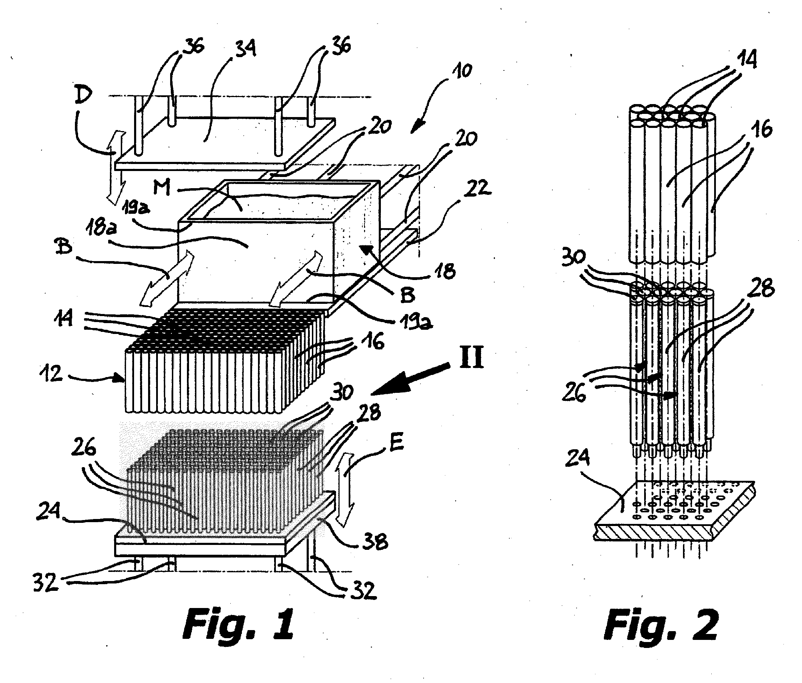

After the tank 18 has been filled, the actuators 20 are operated to cause the tank 18 to move forward (arrows B of Figures 1, 3 and 4) until it reaches its active position in which it is completely superimposed on the mold 12. During the movement of the tank 18, the mixture M penetrates into the various recesses 14 of the mold 12 by gravity drop, along the direction shown by arrows C of Figure 4. Conveniently, the filling step of the recesses 14 of the mold 12 comprises two subsequent moving steps of the tank 18 between its resting position and its active position, in order to ensure optimal filling up of the recesses 14.

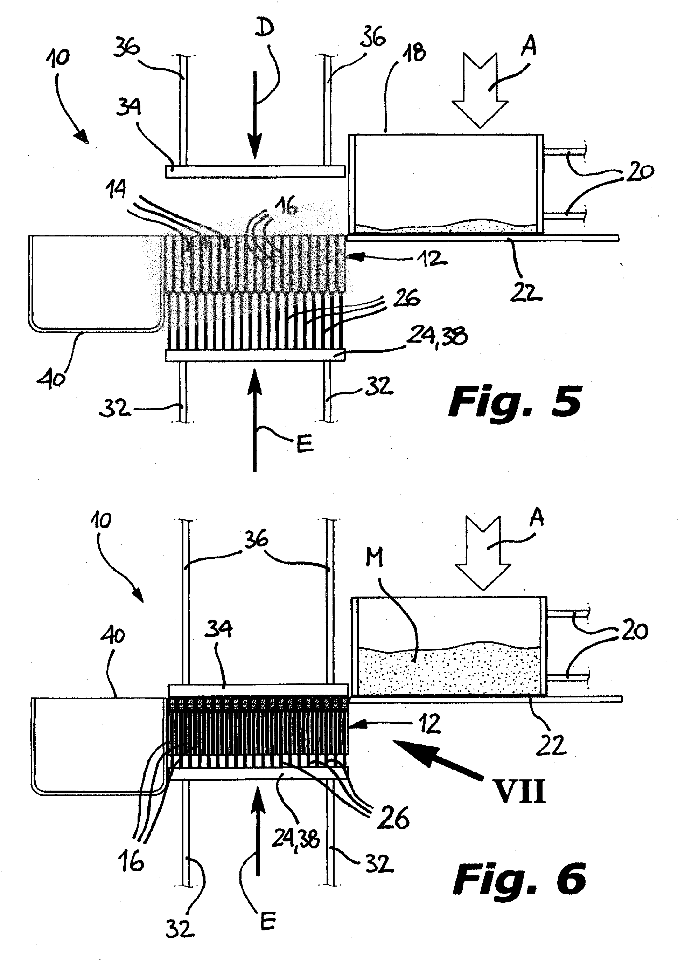

At the end of the filling step of the recesses 14, the tank is brought back to its resting position above the plate 22, where another filling step thereof begins, by feeding a fresh amount of mixture M coming from the screw feeder mixer, as shown by arrows A in Figures 5, 6 and 8.

In the meanwhile, the cover plate 34 is brought into contact with the upper surface of the mold 12, by operation of the actuators 36 along the direction shown by arrow D of Figures 1 and 5, so as to close the upper ends of the recesses 14 (figure 6). In this configuration of the machine 10, the actuators 32 are operated so as to lift the plates 24 and 38 together (arrows E of Figures 1, 5 and 6), as well as the pistons 26 together with them, in order to apply a desired compression to the mixture M contained in each recess 14, by sliding thereof in such recesses. In this manner, it is possible to get a desired length and density of the agglomerate bodies that will be obtained at the end of the manufacturing cycle performed by the machine 10.

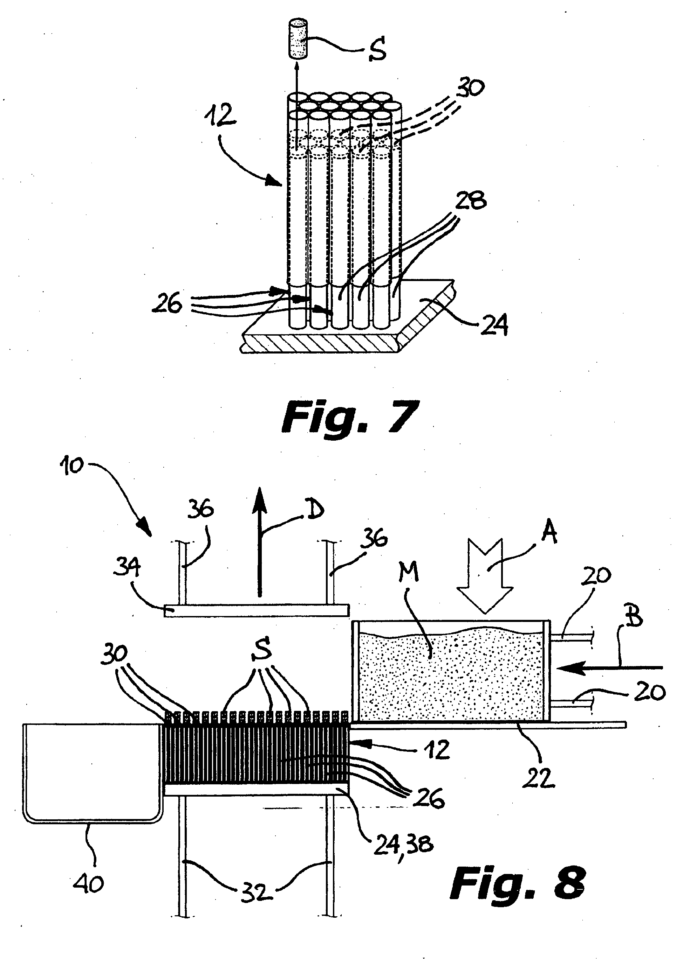

When the desired condition of compression of the mixture M within the recesses 14 is reached as a result of the action of the pistons 26, the step of polymerization of the adhesive contained in the material M begins because of the heat delivered by the heating means of the plate 38, which step lasts for a predetermined time needed to obtain a solid body of cork agglomerate, indicated by S in Figure 7, within each recess 14.

At the end of the polymerization step of the adhesive, lifting of the plate 34 is controlled by operating the actuators 36 (arrow D of Figure 5), in order to open the top of the recesses 14 of the mold 12.
Ejection of the bodies S from the recesses 14 is caused by a further operation of the actuators 32 along the direction of arrows E, in consequence of which the pistons 26 slide along the recesses 14 until their heads 30 reach the level of the upper surface of the mold 12, causing complete ejection of the bodies S from such recesses.

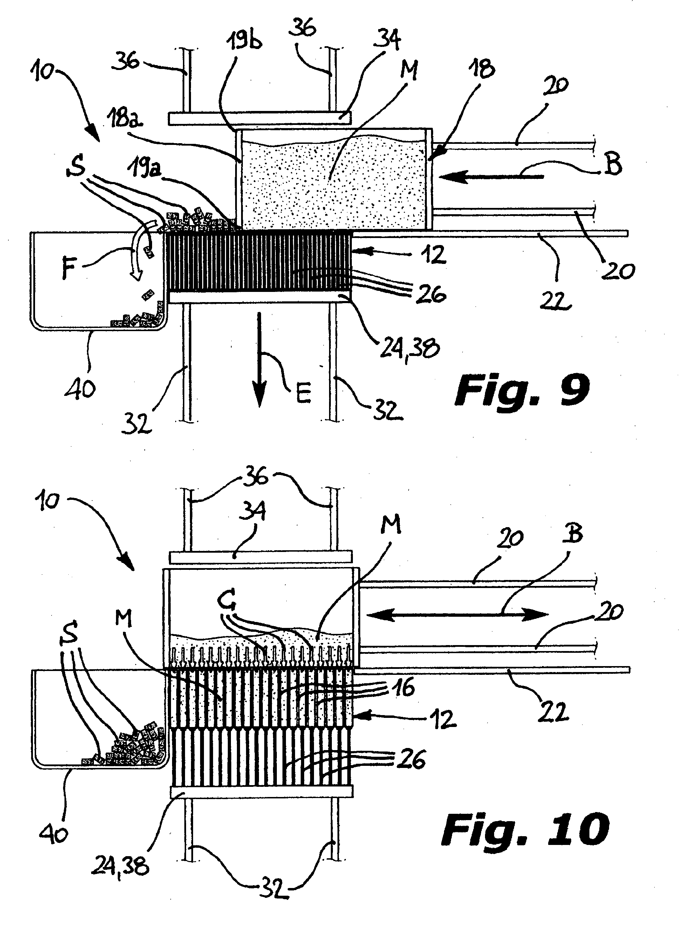

In this condition, the tank 18 is operated again by the actuators 20 (arrows B of Figures 8 to 10) in order to move the tank 18 from its resting position above the plate 22, to its position overlapping the mold 12, preferably by two subsequent steps of to-and-fro movement. During these two steps, the fresh mixture M contained in the tank is fed to the recesses 14 of the mold 12, from which the bodies S obtained from the previous manufacturing cycle had been ejected before, while the edges 19a and 19b of the front wall 18a of the tank 18, as a result of its movement, scrape respectively the top surface of the mold 12 and the lower surface of the plate 34 to remove the bodies S arranged on them and push them to a collection container 40 associated with the machine 10, in which they fall according to the direction indicated by arrow F of Figure 9.
In this manner the machine 10 is ready to start a new cycle for manufacturing bodies S of cork agglomerate.

## Claims

1. Machine for manufacturing bodies of cork agglomerate, in particular stoppers to be used in the oenological field, comprising:
a mold (12) having an upper and a lower surface and defining a plurality of cylindrical recesses (14) parallel to each other between said upper and lower surface, each recess (14) being intended to form a body (S) of cork agglomerate starting from a mixture (M) that consists essentially of dosed amounts of granulated cork and adhesive,
a device for distributing (18) said mixture (M), intended to receive the mixture (M) in order to deliver it to the recesses (14) of the mold (12),
closure means (30, 34) for closing the mold (12), adapted to close the recesses (14) of the mold (12),
compression means (24, 26, 28, 30) for compressing the mixture (M) in the recesses (14) of the mold (12),
heating means for heating the mixture (M) contained in the recesses (14) of the mold (12), adapted to heat the mixture (M) until it reaches a temperature of polymerization of the adhesive, and
ejection means (24, 26, 28, 30) for ejecting the bodies (S) of granulated cork so obtained, from the recesses (14) of the mold (12),
**characterized in that**:
- said mold (12) is mounted stationarily with respect to the machine (10),
- said device (18) for distributing the mixture (M) is slidably mounted along the upper surface of the mold (12) between a resting position separated and adjacent to said mold (12), and an active position above the upper surface of the mold (12) in which the mixture (M) received in said distributing device (18) is delivered to the recesses (14) of the mold (12),
- said closure means comprise a cover plate (34) movable with respect to the mold (12), and intended to contact the upper surface of the mold (12) when said distributing device (18) is in said resting position, for closing the upper end of said recesses (14),
- said compression means consist of one piston for each recess (14) of the mold (12), which is adapted to close the lower end of the recess (14) and is axially slidable along the respective recess (14) to adjust the compression of the mixture (M) contained in the recess (14) to a desired value of compression, and **in that**
- the heating means are associated with said mold (12) in order to heat the mold and the mixture (M) contained in said recesses (14), after delivery of the mixture (M) to the recesses (14).

2. Machine according to claim 1, **characterized in that** said pistons (26) are carried by a base plate (24) of the machine (10), the base plate being slidably mounted with respect to the mold (12) along the axial direction of the recesses (14).

3. Machine according to claim 2, **characterized in that** the heating means are associated with an auxiliary plate (38) connected to the base plate (24), and are controlled so as to allow the mold (12) to be maintained at a predetermined temperature.

4. Machine according to claim 3, **characterized in that** said heating means are of the resistor and/or the diathermic oil circulation type.

5. Machine according to any one of claims 1 to 4, **characterized in that** said device for distributing the mixture (M) comprises a movable tank (18) slidably mounted on the mold (12), such a tank (18) being operated according to a reciprocating motion between a standing plate (22) and the mold (12), along the direction transverse to said recesses (14).

6. Machine according to claim 5, **characterized in that** said tank (18) is provided for delivering said mixture (M) to the recesses (14) of the mold (12) by gravity feed.

7. Machine according to claim 5 or 6, **characterized in that** the mixture (M) is fed to said tank (18) through a screw feeder mixing unit arranged above the tank (18).

8. Machine according to any one of claims 1 to 7, **characterized in that** the closure means comprise a cover plate (34) movable with respect to the mold (12) along the axial direction of the recesses (14) of the mold (12).

9. Machine according to any one of claims 1 to 8, **characterized in that** said ejection means for ejecting the bodies (S) of granulated cork from the mold (12), comprise said pistons (26) that are axially slidable along the recesses (14) of the mold (12).

10. Machine according to claim 9, **characterized in that** said ejection means further comprise at least one scraper member (19a, 19b) slidably mounted with respect to said mold (12) on its side opposite to said pistons (26), so that it can be operated according to a reciprocating motion along the direction transverse to the recesses (14) of the mold (12).

11. Machine according to claim 10, **characterized in that** said at least one scraper member (19a, 19b) is coupled to said tank (18).

## Patentansprüche

1. Maschine zum Herstellen von Körpern aus Korkagglomerat, insbesondere von Stopfen, die im önologischen Bereich einzusetzen sind, Folgendes umfassend:
eine Form (12), die eine obere und eine untere Oberfläche aufweist und zwischen der oberen und der unteren Oberfläche mehrere zueinander parallele zylindrische Aussparungen (14) definiert, wobei jede Aussparung (14) dazu bestimmt ist, einen Körper (S) aus Korkagglomerat zu formen, ausgehend von einer Mischung (M), die im Wesentlichen aus dosierten Mengen von Korkgranulat und Klebemittel besteht,
eine Vorrichtung zum Verteilen (18) der Mischung (M), die dazu bestimmt ist, die Mischung (M) aufzunehmen, um sie zu den Aussparungen (14) der Form (12) zu befördern,
Verschlussmittel (30, 34) zum Verschließen der Form (12), die ausgebildet sind, die Aussparungen (14) der Form (12) zu verschließen,
Pressmittel (24, 26, 28, 30), um die Mischung (M) in den Aussparungen (14) der Form (12) zu komprimieren,
Erwärmungsmittel zum Erwärmen der in den Aussparungen (14) der Form (12) enthaltenen Mischung (M), angepasst, um die Mischung (M) zu erwärmen, bis sie eine Temperatur erreicht, bei der das Klebemittel polymerisiert, und
Ausstoßmittel (24, 26, 28, 30) zum Ausstoßen der auf diese Weise erhaltenen Körper (S) aus Korkgranulat aus den Aussparungen (14) der Form (12),
**dadurch gekennzeichnet, dass**:
- die Form (12) in Bezug auf die Maschine (10) stationär montiert ist,
- die Vorrichtung (18) zum Verteilen der Mischung (M) entlang der oberen Oberfläche der Form (12) zwischen einer Ruheposition, getrennt von der und angrenzend an die Form (12), und einer aktiven Position oberhalb der oberen Oberfläche der Form (12), in der die in der Verteilungsvorrichtung (18) aufgenommene Mischung (M) zu den Aussparungen (14) der Form (12) befördert wird, verschiebbar montiert ist,
- die Verschlussmittel eine Abdeckplatte (34) umfassen, die in Bezug auf die Form (12) bewegbar und dazu bestimmt ist, die obere Oberfläche der Form (12) zu berühren, wenn die Verteilungsvorrichtung (18) sich in der Ruheposition befindet, um das obere Ende der Aussparungen (14) zu verschließen,
- wobei die Pressmittel aus einem Kolben für jede Aussparung (14) der Form (12) bestehen, der ausgebildet ist, das untere Ende der Aussparung (14) zu verschließen und der entlang der jeweiligen Aussparung (14) axial verschiebbar ist, um das Komprimieren der in der Aussparung (14) enthaltenen Mischung (M) auf einen erwünschten Kompressionswert anzupassen, und dadurch dass
- die Erwärmungsmittel mit der Form (12) verbunden sind, um, nachdem die Mischung (M) zu den Aussparungen (14) befördert wurde, die Form und die in den Aussparungen (14) enthaltene Mischung (M) zu erwärmen.

2. Maschine nach Anspruch 1, **dadurch gekennzeichnet, dass** die Kolben (26) von einer Grundplatte (24) der Maschine (10) getragen werden, wobei die Grundplatte entlang der axialen Richtung der Aussparungen (14) im Verhältnis zur Form (12) verschiebbar montiert ist.

3. Maschine nach Anspruch 2, **dadurch gekennzeichnet, dass** die Erwärmungsmittel mit einer Hilfsplatte (38) zugeordnet sind, die mit der Grundplatte (24) verbunden ist, und so geregelt werden, dass die Form (12) eine vorgegebene Temperatur aufrecht erhalten kann.

4. Maschine nach Anspruch 3, **dadurch gekennzeichnet, dass** die Erwärmungsmittel mit einem Heizwiderstand und/oder durch Umwälzung diathermischen Öls betrieben werden.

5. Maschine nach einem der Ansprüche 1 bis 4, **dadurch gekennzeichnet, dass** die Vorrichtung zum Verteilen der Mischung (M) einen bewegbaren Behälter (18) aufweist, der verschiebbar auf der Form (12) montiert ist, wobei ein solcher Behälter (18) in einer Wechselbewegung zwischen einer stehenden Platte (22) und der Form (12) entlang der Richtung betrieben wird, die quer zu den Aussparungen (14) verläuft.

6. Maschine nach Anspruch 5, **dadurch gekennzeichnet, dass** der Behälter (18) bereitgestellt wird, um durch Schwerkraftwirkung die Mischung (M) zu den Aussparungen (14) der Form (12) zu befördern.

7. Maschine nach Anspruch 5 oder 6, **dadurch gekennzeichnet, dass** die Mischung (M) dem Behälter (18) durch eine Schraubenzuführungs-Mischeinheit, die über dem Behälter (18) angeordnet ist, zugeführt wird.

8. Maschine nach einem der Ansprüche 1 bis 7, **dadurch gekennzeichnet, dass** die Verschlussmittel eine Abdeckplatte (34) aufweisen, die entlang der axialen Richtung der Aussparungen (14) der Form (12) in Bezug auf die Form (12) bewegbar ist.

9. Maschine nach einem der Ansprüche 1 bis 8, **dadurch gekennzeichnet, dass** die Ausstoßmittel zum Ausstoßen der Körper (S) aus Korkgranulat aus der Form (12) die Kolben (26) umfassen, die entlang der Aussparungen (14) der Form (12) axial verschiebbar sind.

10. Maschine nach Anspruch 9, **dadurch gekennzeichnet, dass** die Ausstoßmittel ferner wenigstens ein Spachtelelement (19a, 19b) aufweisen, das in Bezug auf die Form (12) an seiner den Kolben (26) gegenüberliegenden Seite verschiebbar montiert ist, so dass es in einer wechselseitigen Bewegung entlang der Richtung bewegbar ist, die quer zu den Aussparungen (14) der Form (12) verläuft.

11. Maschine nach Anspruch 10, **dadurch gekennzeichnet, dass** das wenigstens eine Spachtelelement (19a, 19b) mit dem Behälter (18) gekoppelt ist.

## Revendications

1. Machine pour la fabrication de corps en liège aggloméré, en particulier de bouchons destinés à être utilisés dans le domaine oenologique, comprenant :
un moule (12) ayant une surface supérieure et une surface inférieure, et définissant une pluralité d'évidements cylindriques (14) parallèle entre eux entre lesdites surfaces supérieure et inférieure, chaque évidement (14) étant destiné à former un corps (S) en liège aggloméré à partir d'un mélange (M) qui est constitué essentiellement de quantités dosées de liège en granulés et d'adhésif,
un dispositif de distribution (18) dudit mélange (M), destiné à recevoir le mélange (M) afin de le délivrer aux évidements (14) du moule (12),
des moyens de fermeture (30, 34) pour fermer le moule (12), adaptés pour fermer les évidements (14) du moule (12),
des moyens de compression (24, 26, 28, 30) pour comprimer le mélange (M) dans les évidements (14) du moule (12),
des moyens de chauffage pour chauffer le mélange (M) contenu dans les évidements (14) du moule (12), adaptés pour chauffer le mélange (M) jusqu'à ce qu'il atteigne une température de polymérisation de l'adhésif, et
des moyens d'éjection (24, 26, 28, 30) pour éjecter, hors des évidements (14) du moule (12), les corps (S) de liège en granulés ainsi obtenus,
**caractérisée en ce que**:
- ledit moule (12) est monté de façon stationnaire par rapport à la machine (10),
- ledit dispositif (18) pour distribuer le mélange (M) est monté coulissant le long de la surface supérieure du moule (12) entre une position de repos, séparée et adjacente audit moule (12), et une position active, au-dessus de la surface supérieure du moule (12), dans laquelle le mélange (M) reçu dans ledit dispositif de distribution (18) est délivré aux évidements (14) du moule (12),
- lesdits moyens de fermeture comprennent une plaque de recouvrement (34) mobile par rapport au moule (12), destinée à être en contact avec la surface supérieure du moule (12) lorsque ledit dispositif de distribution (18) est dans ladite position de repos, pour fermer l'extrémité supérieure desdits évidements (14),
- lesdits moyens de compression se composent d'un piston pour chaque évidement (14) du moule (12), qui est adapté pour fermer l'extrémité inférieure de l'évidement (14) et qui apte à coulisser axialement le long de l'évidement (14) correspondant pour régler la compression du mélange (M) contenue dans l'évidement (14) à une valeur de compression désirée, et **en ce que**
- les moyens de chauffage sont associés audit moule (12) afin de chauffer le moule et le mélange (M) contenus dans lesdits évidements (14), après la délivrance du mélange (M) aux évidements (14).

2. Machine selon la revendication 1, **caractérisée en ce que** lesdits pistons (26) sont portés par une plaque de base (24) de la machine (10), la plaque de base étant montée coulissante par rapport au moule (12) le long de la direction axiale des évidements (14).

3. Machine selon la revendication 2, **caractérisée en ce que** les moyens de chauffage sont associés à une plaque auxiliaire (38) reliée à la plaque de base (24), et sont commandés de manière à permettre au moule (12) d'être maintenu à une valeur prédéterminée de température.

4. Machine selon la revendication 3, **caractérisée en ce que** lesdits moyens de chauffage sont du type résistance et / ou diathermique à circulation d'huile.

5. Machine selon l'une quelconque des revendications 1 à 4, **caractérisée en ce que** ledit dispositif de distribution du mélange (M) comprend un réservoir mobile (18), monté de façon coulissante sur le moule (12), ce réservoir (18) étant actionné selon un mouvement de va-et-vient entre une plaque d'appui (22) et le moule (12), le long d'une direction transversale auxdits évidements (14).

6. Machine selon la revendication 5, **caractérisée en ce que** ledit réservoir (18) est adapté à délivrer ledit mélange (M) aux évidements (14) du moule (12) par alimentation par gravité.

7. Machine selon la revendication 5 ou la revendication 6, **caractérisée en ce que** le mélange (M) est introduit dans ledit réservoir (18) au moyen d'une unité de mélange à dispositif d'alimentation à vis, agencée au-dessus du réservoir (18).

8. Machine selon l'une quelconque des revendications 1 à 7, **caractérisée en ce que** les moyens de fermeture comprennent une plaque de recouvrement (34) mobile par rapport au moule (12) le long de la direction axiale des évidements (14) du moule (12).

9. Machine selon l'une quelconque des revendications 1 à 8, **caractérisée en ce que** lesdits moyens d'éjection pour éjecter les corps (S) de liège granulé à partir du moule (12), comprennent lesdits pistons (26) qui sont axialement coulissant le long des évidements (14) du moule (12).

10. Machine selon la revendication 9, **caractérisée en ce que** lesdits moyens d'éjection comprennent en outre au moins un élément de raclage (19a, 19b) monté de manière coulissante par rapport audit moule (12) sur le côté de celui-ci opposé auxdits pistons (26), de sorte qu'il peut être actionné selon un mouvement de va-et-vient selon une direction transversale par rapport aux évidements (14) du moule (12).

11. Machine selon la revendication 10, **caractérisée en ce que** ledit au moins un élément de raclage (19a, 19b) est relié audit réservoir (18).
